(19)

Europäisches
Patentamt
European
Patent Office
Office européen
des brevets

(11) **EP 2 278 793 A2**

(12) **EUROPEAN PATENT APPLICATION**
published in accordance with Art. 153(4) EPC

(43) Date of publication:
**26.01.2011 Bulletin 2011/04**

(51) Int Cl.:
**H04N 5/44** (2011.01)

(21) Application number: **09733258.9**

(22) Date of filing: **24.03.2009**

(86) International application number:
**PCT/KR2009/001495**

(87) International publication number:
**WO 2009/128611 (22.10.2009 Gazette 2009/43)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **17.04.2008 KR 20080035771**

(71) Applicant: **Ledworks Co., Ltd.
Gyeonggi-do 445-300 (KR)**

(72) Inventors:
• **CHAE, Gyun
Suwon-si
Gyeonggi-do 443-470 (KR)**
• **LEE, Chankil
Yongin-si
Gyeonggi-do 448-531 (KR)**

(74) Representative: **Klunker . Schmitt-Nilson . Hirsch
Patentanwälte
Destouchesstrasse 68
80796 München (DE)**

(54) **TUNNEL VIDEO SYSTEM ADAPTIVE TO TRAIN SPEED VARIATION**

(57) As the advertisement market of a subway has emerged, a new subway advertisement system for displaying a video in a window of a moving train is suggested. The video quality in such a subway advertisement system is dependent on the accurate and rapid measurement of the speed of the train and achievement of the frame and horizontal pixel synchronization of the video to be represented. A sensor network of a cluster structure is provided that is effective to the subway advertisement system offering based on the network a high-speed/high precision speed measurement and the adaptive synchronization algorithm. Further, the video contents must be often renewed in the subway advertisement system and a speedy data downloading is essential. The tunnel video system suggests a method for improving the data speed through constructing a new structure of a data exclusive network in addition to the sensor network.

[FIG. 1]

EP 2 278 793 A2

## Description

## TECHNICAL FIELD

The present disclosure relates to a tunnel video system, in which a plurality of vertical one-dimensional LED arrangements in modules installed on the walls of covered transportation ways including subways and tunnels being spaced apart from each other at a predetermined interval horizontally and a two-dimensional video is displayed through a window of a vehicle such as a train by an afterimage effect of the eye of a passenger by the movement of the train.

In particular, the tunnel video system of the present disclosure provides an adaptive synchronization method for improving the quality of an image that is degraded due to the speed change of the train, a system structure for the adaptive synchronization method, and its related technologies including a synchronization algorithm.

## BACKGROUND OF THE DISCLOSURE

As the advertisement market of subways has emerged, a new system for subway venues has been presented by displaying a video through the windows of a train that moves at a predetermined speed.

Initially introduced was a displaying scheme of enlarging a cut of video film with sequentially installing the enlarged video frames of the on the walls of a tunnel for the train, and flickering film backlights for the respective frames according to the train speed. Such a scheme has an advantage in that it does not require a complicated electronic device, it is easy to maintain and repair, and the system is low-priced. However, there is a disadvantage that it is impossible to control the rate of the image and the degree of brightness and definition is low. In particular, a large quantity of film material is required and the renewal of information is difficult so that the above technology goes into decline.

A technology for substituting the film material with an LCD or PDP panel had been introduced. However, it has a disadvantage in that the panel for representing a large screen is high-priced and synchronization must be implemented by the unit of a frame, not a pixel.

An LED-type tunnel video system can solve the above problems. However, if the speed of the train is varied with the frame and horizontal synchronization time being preset regardless of the train speed, the quality of the displayed video is affected correspondingly. That is, the frame synchronization may fail resulting in shaking images in which the starting point of a video is not uniform. Further, if the synchronization of the horizontal pixels is not achieved, the interval between the horizontal pixels becomes non-uniform so as to deteriorate the definition and contrast of the image. In this respect, a synchronization technology adaptive to the speed change of the moving vehicle has been demanded in order to prevent the image quality from degrading due to the speed change.

In order to realize the speed-adaptive synchronization, a sensor capable of accurately measuring the speed of the moving object, i.e. vehicle is primarily required. The diffusion-type LED sensor now popular is advantageously low-priced, but it fails to provide an accurate and fast speed sensing due to the inherent slow response time and relatively large size of the beam it radiates. Further, with the diffusion-type LEDs the tolerance of error and deviation of the measured value will be unacceptably large for every measurement.

The video ad contents in the tunnel video system must often be renewed necessitating a network performance capable of downloading the high-capacity data with high-speed and high-reliability. To this end, there may be a solution of designing and implementing a high-performance network having the high-speed and high-reliability. However, it is necessary to ensure the high data speed and reliability at a relatively low expense with the resultant efficiency.

Further, a connector and cable used for connecting a display controller in the tunnel video system were costly to meet the requirements such as being fireproof, waterproof, and dustproof and the changing authorization requirements by the respective countries contributed to the rising cost. Therefore, there is also a need to find a cabling solution.

## DISCLOSURE OF THE INVENTION

Therefore, the present disclosure has been made in view of the above-mentioned problems, and the present disclosure provides a tunnel video system.

Further, the present disclosure provides an adaptive tunnel video system according to the speed change of the train.

In accordance with an aspect of the present disclosure, there is provided a tunnel video system including: a main controller for operating and managing the system, the main controller being connected with exterior networks; a plurality of display controllers connected with the main controller so as to receive data; a plurality of LED modules driven by the plurality of display controllers; and a plurality of sensors connected at least one of the plurality of display controllers so as to sense the speed of a moving object, in which the plurality of display controllers are divided into a plurality of clusters including the display controllers connected with the sensors and the display controllers connected with the main controller, respectively, one of the display controllers in each of the clusters is a cluster leader display controller transmits the data to the display controller included in the same cluster by a data network that includes a first route connected with the main controller and a second route connected with the rest display controllers included in the same cluster, and the display controllers connected with the sensors among the display controllers included in each of the clusters have sensor signals transmitted to the display controllers included in the same cluster by a sensor network that includes a third route connected with the display controllers included in the same cluster.

In accordance with an aspect of the present disclosure, there is provided a tunnel video system including: a main controller: a plurality of display controllers connected with the main controller so as to receive a data; a plurality of LED modules driven by the plurality of display controllers; and a plurality of sensors connected to at least one of the plurality of display controllers so as to sense the speed of a moving object, in which at least one of the plurality of display controllers drives each of the LED modules according to first speed signals sensed by the sensors arranged in a first direction and second speed signals sensed by the sensors arranged in a second direction.

Accordingly, the present disclosure can provide the tunnel video system.

Further, the present disclosure can provide the adaptive tunnel video system according to the speed change of the train.

## BRIEF DESCRIPTION OF THE DRAWINGS

The foregoing and other objects, features and advantages of the present disclosure will become more apparent from the following detailed description when taken in conjunction with the accompanying drawings in which:

FIG. 1 is a view illustrating a network structure of a tunnel video system according to an embodiment of the present disclosure;
FIG. 2 is a view illustrating the structure of a display controller of a tunnel video system according to an embodiment of the present disclosure;
FIG. 3 is a view illustrating an arrangement of LED modules of a tunnel video system according to an embodiment of the present disclosure;
FIG. 4 is a view illustrating a sensing operation for measuring the speed of a train in a tunnel video system according to an embodiment of the present disclosure;
FIG. 5 is a view illustrating a speed measurement when display controllers and sensors are installed on one side of the tunnel and reflective plates are installed on the other side of the tunnel in a tunnel video system according to an embodiment of the present disclosure;
FIG. 6 is a view illustrating cluster structures and sensor networks in a tunnel video system according to an embodiment of the present disclosure;
FIG. 7 is a view illustrating the transmission of sensor signals in a tunnel video system according to an embodiment of the present disclosure;
FIG. 8 is a view illustrating parameters for a frame definition that is to be used in the adaptive synchronization algorithm in a tunnel video system according to an embodiment of the present disclosure;
FIG. 9 is a view illustrating a screen division display scheme in a tunnel video system according to an embodiment of the present disclosure;
FIG. 10 is a view illustrating an algorithm required in a second processor in a tunnel video system according to an embodiment of the present disclosure;
FIG. 11 is a view illustrating a network in which cluster leader display controllers are Ethernet and RS-485 gateways in a tunnel video system according to an embodiment of the present disclosure;
FIG. 12 is a view illustrating a network structure in which cluster leader display controllers are WLAN and RS-485 gateways in a tunnel video system according to an embodiment of the present disclosure;
FIG. 13 is a view illustrating a network structure in which all of the display controllers are the WLAN clients in a tunnel video system according to an embodiment of the present disclosure;
FIG. 14 is a view illustrating a method for downloading by the compression of the video data in a tunnel video system according to an embodiment of the present disclosure; and
FIG. 15 is a view illustrating a network structure based on a power line communication network in a tunnel video system according to an embodiment of the present disclosure.

## DETAILED DESCRIPTION OF THE EXEMPLARY EMBODIMENTS

Hereinafter, a tunnel video system according to an embodiment of the present disclosure will be described with reference to the accompanying drawings.

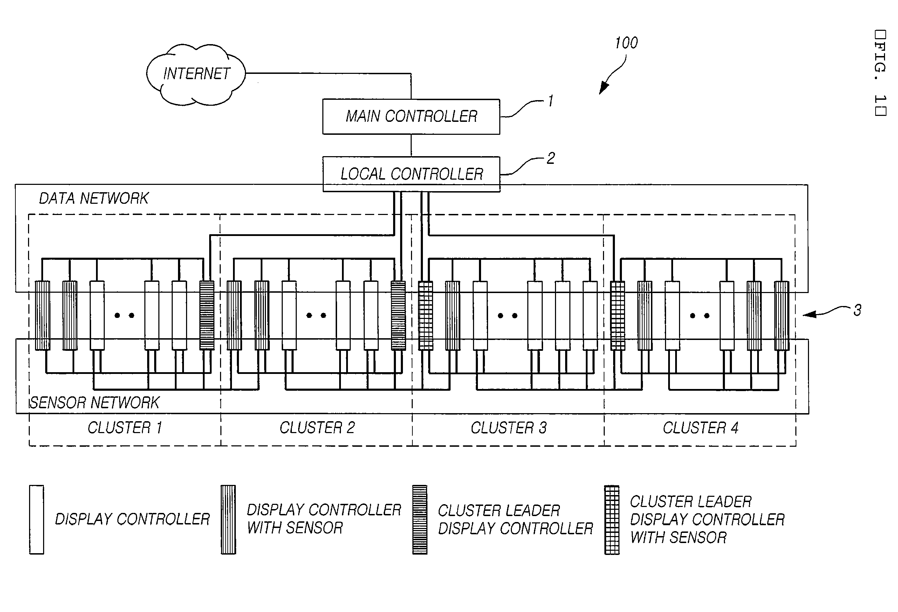

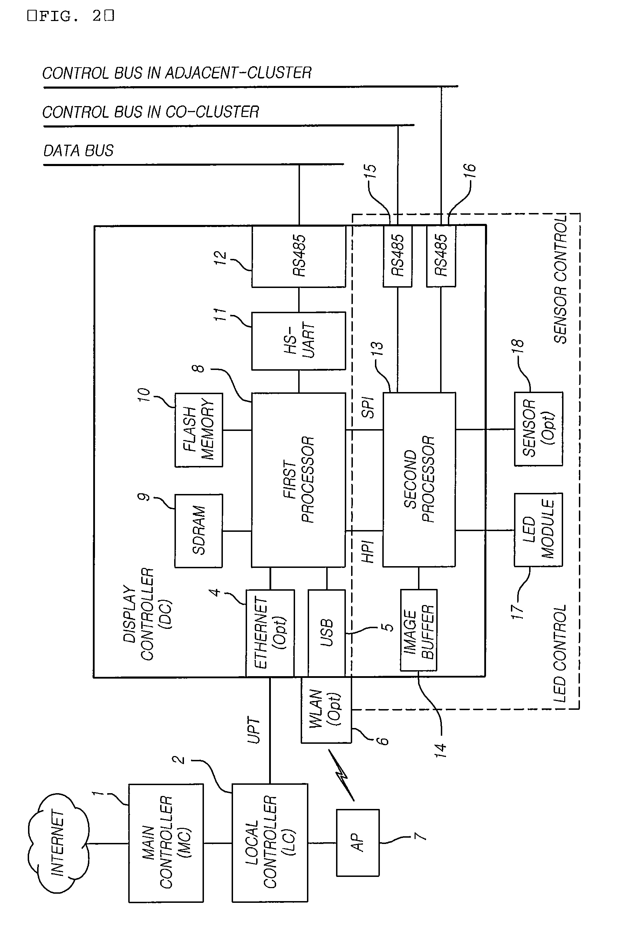

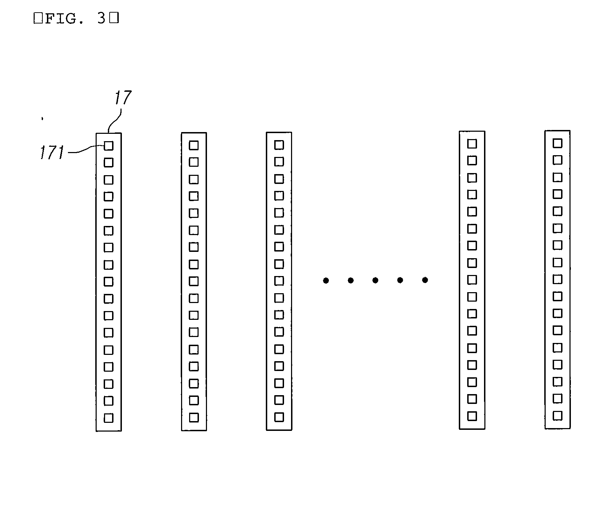

FIG. 1 is a view illustrating a network structure of a tunnel video system 100 according to an embodiment of the present disclosure; FIG. 2 is a view illustrating a structure of a display controller of the tunnel video system 100 according to an embodiment of the present disclosure; and FIG. 3 is a view illustrating an arrangement of an LED module of the tunnel video system 100 according to an embodiment of the present disclosure.

To describe the primary component first, as shown in FIG. 3, the tunnel video system 100 includes a plurality of LED modules 17 arranged in a horizontal direction. Each of the LED modules 17 includes a plurality of LEDs 171 one-dimensionally arranged in a vertical direction and each of the LEDs 171 can emit R,G,B beams.

Further, the tunnel video system 100 includes display controllers (not shown in FIG.1) assembled with the respective LED modules 17 so as to control each of the LED modules 17.

In the embodiment of the present disclosure, the display controller is depicted as formed in a chip to be mounted in a circuit board within a tunnel wall-mounted structure that supports the LED module 17 as well as the sensor. However, this is not to limit the present disclosure, but the controller and sensor may be placed in different ways.

Each of the LED modules 17 displays one frame image. The number of LEDs 171 that are one-dimensionally arranged in a vertical direction in each of the LED modules 17 refers to the number of pixels in the vertical direction within the frame, and the number of flickering times of the LED 171 arrangement is the number of pixels in a horizontal direction within the single frame. Further, the number of LED modules 17 arranged in the horizontal direction equals the number of frames of the image.

Therefore, when the vertical LEDs 171 flicker several times to several hundred times by the train passing momentarily, they can be recognized by the train passengers as a screen of one frame displayed due to the visual afterimage effect and also as if a video is displayed by the operation of the plurality of LED modules 17.

Now, referring to FIG. 1, the tunnel video system 100 according to an embodiment of the present disclosure includes a main controller (MC) 1, a local controller (LC) 2, and a plurality of display controllers (DC) 3.

As shown in FIG. 1, according to the embodiment of the present disclosure, the plurality of display controllers 3 may respectively include display controllers with sensors, cluster leader display controllers, cluster leader display controllers with sensors, and non-leading common display controllers without sensors.

Further, as shown in FIG. 1, the tunnel video system according to the embodiment may have two classified networks of a data network and a sensor network. Further, the display controllers 3 are divided by the unit of cluster, wherein some clusters include one cluster leader display controller 3 and other clusters include display controllers 3 with at least two sensors. For example, FIG. 1 illustrates the network structure and the arrangement of the display controllers 3, but it is not limited to the present disclosure.

In the data network, the local controller 2 may be connected with the cluster leader display controllers 3 included in the clusters, respectively. Further, the respective cluster leader display controllers 3 in the select clusters may be connected to the plurality of display controllers 3 included in the common cluster or co-cluster, respectively. The local controller 2 may be optional. If the local controller 2 were not provided, the main controller 1 may be connected to the plurality of cluster leader display controllers 3 included in the clusters, respectively.

In the sensor network, the display controller 3 with sensor may be connected with the display controller 3 included in the co-cluster. Further, the display controller 3 with sensor may be also connected with the display controller 3 having no sensor and included in an adjacent cluster.

Therefore, the display controllers 3 without sensors may be connected with the display controllers 3 with sensors in the co-cluster as well as the display controllers 3 with sensors in their adjacent clusters.

FIG. 2 illustrates the structure of the cluster leader display controller 3 with sensor.

As described above, the tunnel video system 100 according to the embodiment includes the main controller 1 that is connected with the exterior network including the internet network and operates and manages the system 100 and the local controller 2 for connecting the main controller 1 with the display controller 3.

In general, the cluster leader display controller 3 with sensor shown in FIG. 2 internally performs two functions of an LED control and sensor control.

The communication between the main controller 1 and the display controller 3 is performed through the local controller 2, in which a wired communication may be implemented through an Ethernet connector 4 within the display controller 3, and alternatively a wireless communication may be implemented through an access point (AP) 7 connected to a WLAN card 6 that is mounted on an USB 5 and the local controller 2. In the embodiment, the local controller 2 and the display controller 3 can be connected either by wire or wirelessly or a combination of the two ways.

The display controller 3 includes a first processor 8 for processing non-real-time software and a second processor 13 for processing real-time software.

Operation software, application software, and software for the second processor 13 may be stored in flash memory 10. The communication between the first processor 8 and the second processor 13 may be implemented through an HPI interface for data, and through an SPI interface for the modification and control of a register.

The image data to be displayed may be stored in an image buffer 14 through the HPI interface.

In the tunnel video system according to the embodiment, multiple display controllers may constitute one cluster. The display controller 3 shown in FIG. 2 may operate as the cluster leader.

If the above display controller 3 were the cluster leader, the data downloaded from the main controller 1 and local controller 2 is transferred to every display controller 2 within the co-cluster, such a transmission is realized by converting the data into a serial signal by the HS-UART (High Speed UART-Interface) 11 and then transferring the converted signal through a multi-drop RS-485 bus 12.

The second processor 13 calculates the train speed from the signal inputted from the sensor 18 and generates a synchronization signal for driving the LED modules 17 based on the calculated speed.

FIG. 2 illustrates the display controller 3 loaded or connected with the sensor 18 although not all the display controllers 3 should have the sensors connected.

The display controller 3 connected with the sensor 18 may shape the signal inputted from the sensor 18 so as to transmit the shaped signal to the connected display controller 3 less sensor within the co-cluster through the RS-485 15 or possibly to the display controller 3 less sensor within the adjacent cluster through the RS 485 16.

If the display controller 3 were not the cluster leader, the Ethernet controller 4 may not be installed and also the sensor 18 and the WLAN module 6 are optional.

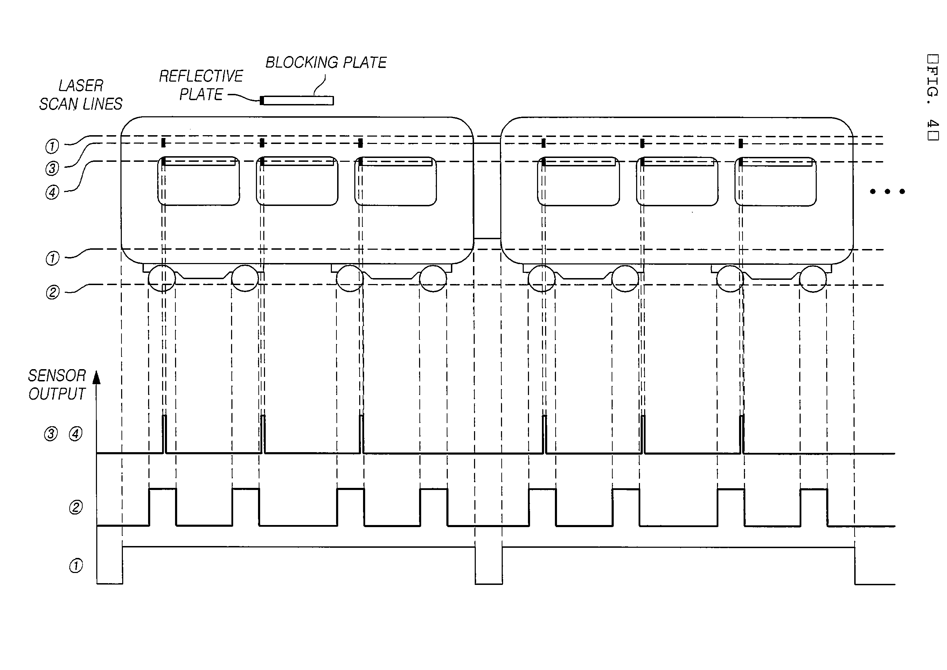

FIG. 4 is a view illustrating a sensing operation for measuring the speed of a train in the tunnel video system according to an embodiment of the present disclosure.

The tunnel video system according to an embodiment of the present disclosure can employ a retro-reflective method that uses a laser sensor and a corner-cube reflective plate for measuring the accurate speed required in the video synchronization.

According to the retro-reflective method, it is easy to install the reflective plate, it is resistant to the shaking by train vibrations, and it is possible to measure the long distance, so that it is possible to accurately measure the speed corresponding to the application of the present disclosure.

For example, the sensors may be installed at a predetermined interval while the reflective plates having the corner-cube structure are fixed across from the sensors to measure the changes of time the train blocks the laser beam projected by one or more laser diodes between the sensor 18 and the reflective plate so as to calculate the train speed.

As shown in FIG. 4, the reflective plate of the laser sensor can be installed in various places capable of blocking/reflecting the laser beam. There are two methods for blocking/passing the beam from the laser diode installed on the tunnel wall.

It is possible to attach the reflective plates on the train and the alternative is to install the reflective plates on the opposite side of the tunnel wall on which the sensors 18 are installed. When attaching the reflective plates to the train, the attachments may be made either at the car exterior □ besides the window at a predetermined interval or on the windows □.

In the case of attaching the reflective plates on the windows, additional plates may be added to block the laser beam for the passengers' safety. In this case, the time of blocking the beam is related to the distance between the adjacent reflective plates. In the case the reflective plates are off the train, the laser beam may then be blocked by the train as along □ and/or □ in FIG. 4, and passes through the rest. In this case, there is a method for making the beam pass the couplings of the train or the spaces between the wheels of the train. At this time, the blocking distance of the beam may correspond to the length of a single car of the train for the blocking □ and/or the wheel dimension of the train for the blocking □.

The image quality in such a system may be determined by how accurately the speed of the moving object (train) may be measured and how rapidly the rate of the speed changes may be traced. Therefore, the sensor network must be structured so as to easily control the interval of the speed measurements considering the acceleration of the moving object. In this way, it is possible to change the speed measurement interval by changing the number of the sensors and/or their mounting locations.

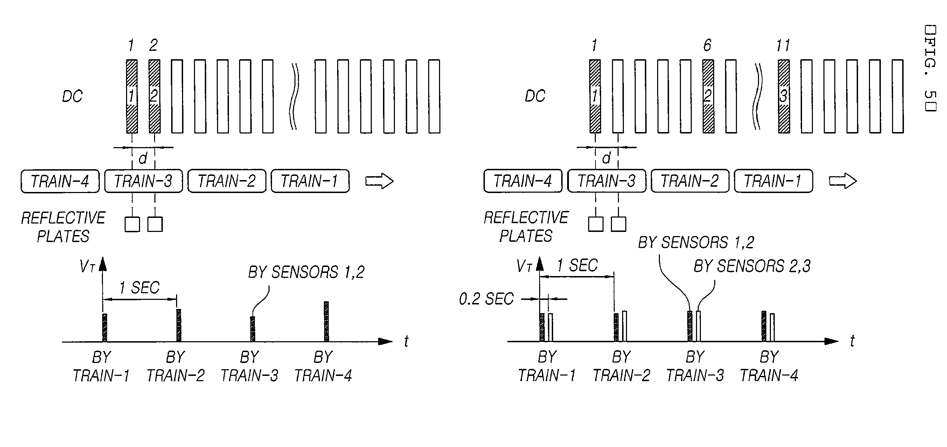

FIG. 5 illustrates the speed measurement in the tunnel video system according to the embodiment where the display controllers 3 and the sensors 18 are installed on one side of the tunnel and the reflective plate is installed on the opposite side of the tunnel.

Referring to FIG. 5, for example, in a case where the sensors 18 are on some selected display controllers 3 and the reflective plates are installed across from the sensors 18, it is assumed that the speed of the train is 90km/h (=25m/s), the distance (d) between the adjacent display controllers 3 is set as d=1.0m for generating 25 frames/sec of the frame speed (FR), and the length of one of the passenger cars identified as Train-1 to Train-4 is 25m.

In FIG. 5, if the sensors 18 were installed on the first and second display controllers 3, the speed of the moving train may be renewed at the frequency of once per second. If the train had four cars, four speed renewals may be made.

If the sensors 18 are installed on the 1st, 6th and 11th display controllers 3, the speed of the moving train may be renewed at the frequency of two times per second. But with respect to the speed from the sensor '1' and sensor '2', the speed in the secondary measurements by the sensors numbered 2 and 3 may be shifted by 0.2 second. With four cars of the train, total eight speed renewals may be made. Through such a scheme, the speed renewal pattern can be designed according to the sensor-mounting locations and the number of sensors.

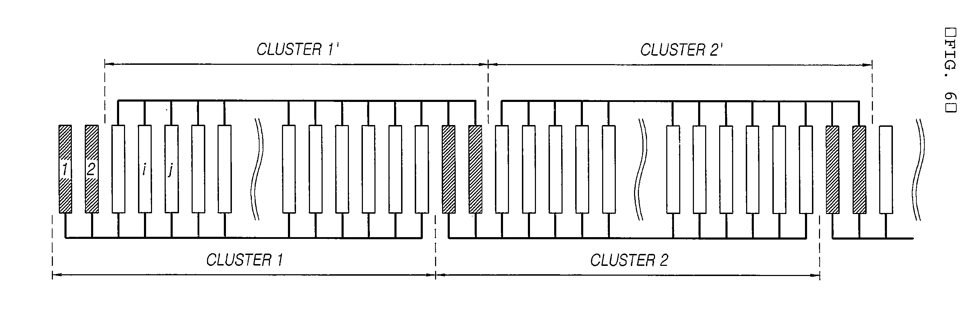

FIG. 6 is a view illustrating a cluster structure and a sensor network in the tunnel video system 100 according to an embodiment of the present disclosure.

Referring to FIG. 6, the network having the cluster structure as shown can be used for renewing the speed in the given sensor network structure as many times as possible. That is, by means of the network structure with the concept of the co-cluster and adjacent cluster, it is possible to use the sensor signal generated in the adjacent cluster.

For example, the $i^{th}$ and $j^{th}$ display controllers 3 can measure the speed from a signal generated by the sensor '1' in the co-cluster and simultaneously can use the another sensor signal generated in an adjacent cluster 1'. But, when the sensor signals are generated in the common and adjacent clusters at the same time, the priority may be given to the adjacent cluster.

If a sensor output signal is generated, a low-latency network that can process the signal in real time and calculate the speed may be required. Information for the video frame start and the horizontal pixel synchronization can be extracted from the calculated speed. To this end, a high-speed and high precision sensor for sensing the speed change may be provided. Further, it is possible to provide a network for transmitting the extracted information to the display controllers 3 real time and a high-speed real-time processor for renewing the LED operation timing according to the speed information.

Otherwise, if a microprocessor such as the first processor 8 shown in FIG. 2 were left to take the lead, latency by the data communication may occur in the course of transmitting the measured speed to all of the display controllers 3. Especially, if the operation software were used, the processing time by the scheduler is not uniform and an accurate speed renewal is fundamentally impossible.

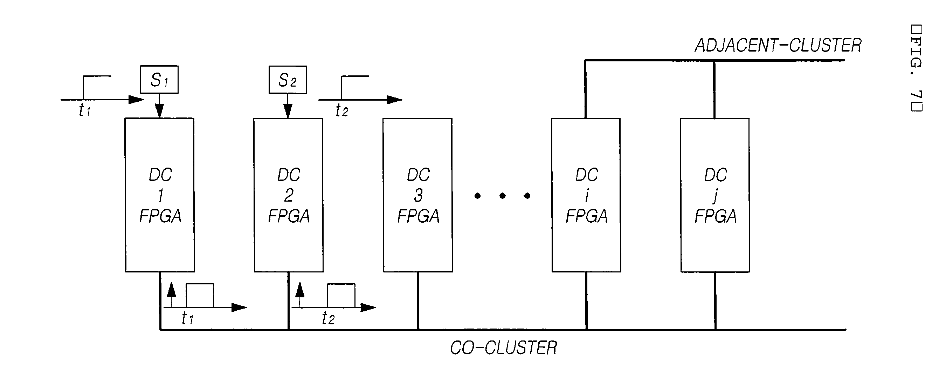

FIG. 7 is a view illustrating the transmission of the sensor signal in the tunnel video system 100 according to an embodiment.

Referring to FIGs. 2 and 7, in the embodiment of the present disclosure, the second processor 13 measures the speed and propagates the pulse by means of two RS-485 networks 15 and 16 employed. If the signal is inputted from sensor S1, the signal is shaped into a square wave having a predetermined time and is outputted to the RS-485 multi-drop bus. The signal pulse is received in the entire display controllers 3 within the co-cluster. After a certain time, if a signal is inputted from sensor S2, the signal pulse is transmitted to every display controller 3 within the co-cluster by the same process. At this time, all of the display controllers 3 can calculate the time difference between receptions of two pulses so as to calculate the speed.

The above process is identically applied to the pulse transferred from the adjacent cluster. Once the pulse is inputted within the adjacent cluster, it may be given the priority over the pulse generated in the co-cluster. The clusters use the different RS-485 buses so that the second processor 13 within the display controller 3 can discriminate the pulses.

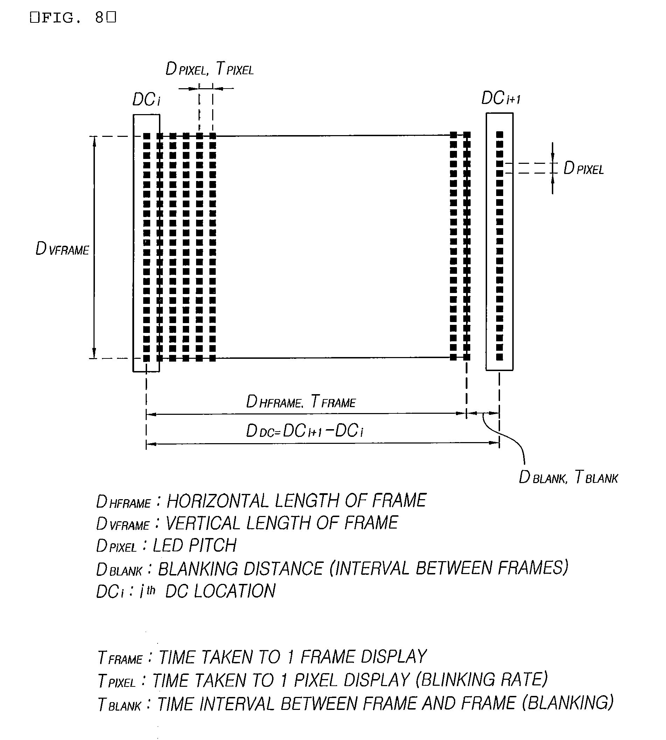

FIG. 8 is a view illustrating parameters for a frame definition that is to be used in the adaptive synchronization algorithm in the tunnel video system 100 according to an embodiment of the present disclosure.

All of the display controllers 3 calculate the speed VT of the train from the inputs of the sensor signals and then calculates the values of the frame start time ($T_{SOB-i}$: time to start of blinking of the $i^{th}$ display controller) and the horizontal pixel driving time ($T_{HS}$: time of horizontal scanning) using the calculated speed VT as below. Here, $D_{OFFSET}$ (i.e. $T_{OFFSET}/V_T$) is the section where the image is not displayed for the safety of the train driver.

$$T_{SOB-i}=T_{OFFSET} + (i-1) D_{DC}/V_T$$

$$T_{HS}=D_{PIXEL}/V_T$$

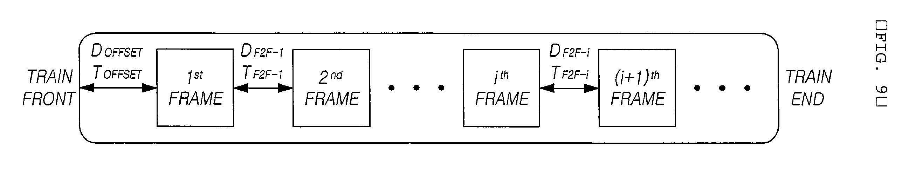

FIG. 9 is a view illustrating a screen division display scheme in the tunnel video system 100 according to an embodiment of the present disclosure.

Referring to FIG. 9, the method of displaying the video on the window of the train includes a panorama scheme of sequentially connecting the image frames to present and a segmented scheme of representing the images being spaced apart from each other at a desired distance.

The panorama scheme corresponds to one example of the segmented scheme when the distance ($D_{F2F-i}$) between the frames is 0. Once the display controllers start the frame display at the time of $T_{SOB-i}$, the frame is not displayed during the display time ($T_{F2F-i}$ corresponding to the distance ($D_{F2F-i}$) between the given display frames. That is, the display controllers display the first frame and then start to display the second frame after the time of $T_{F2F-2}$.

$$T_{F2F-j}=D_{F2F-j}/V_T$$

Further, information on the total length of the train is generally provided so that the display controllers interrupt the display after the time corresponding to the length information so as to minimize the power consumption of the system.

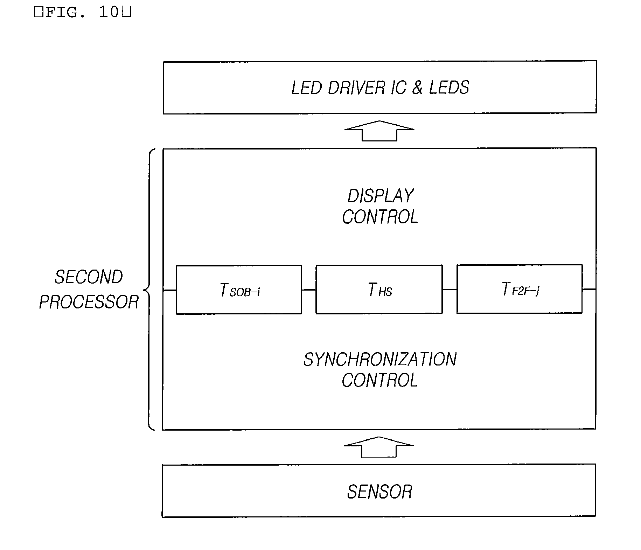

FIG. 10 is a view illustrating an algorithm required in the second processor 13 in the tunnel video system 100 according to an embodiment of the present disclosure.

The times of $T_{SOB-i}$, $T_{HS}$, and $T_{F2F-j}$ required for the synchronization are implemented as counter values and when the counter value becomes 0, the operation is started, respectively. When the train speed is varied, the values of $T_{SOB-i}$, $T_{HS}$, and $T_{F2F-j}$ are renewed according to the variation ($\Delta V_T=V_{T-new}-V_{T-old}$). That is, the time when the counter value becomes 0 is changed according to the speed variation so that the speed adaptive synchronization can be achieved.

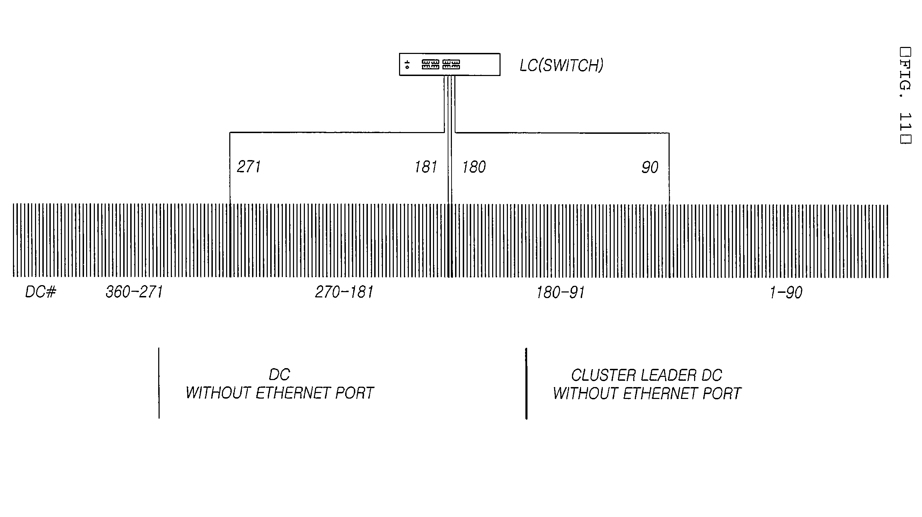

FIG. 11 is a view illustrating the network in which the cluster leader display controllers are Ethernet and RS-485 gateways in a tunnel video system according to an embodiment of the present disclosure.

FIG. 11 exemplifies the wired or wireless network structure for economically and reliably downloading the contents or data from the main controller 1 to the display controllers 3.

Referring to FIGs. 2 and 11, in the wired network structure, connecting all of the display controllers 3 to the local controller 2 through Ethernet guarantees the high speed and reliability, but has the disadvantage in that the transmission is limited by the length of the UTP cable and the number of cables increases to cause an uneconomical structure.

Therefore, the system can use the structure in which the Ethernet link is used only for the display controllers 3 that are nearest to the local controller 2 within the respective clusters and the remaining display controllers 3 are connected to the local controller 2 with the multi-drop RS-485 bus 12. That is, the cluster leader display controllers 3 connected to the local controller 2 becomes masters and the remaining display controllers 3 become the slaves. In the order of their placements, the cluster leader display controllers 3 connected to the local controller 2 control the data communication of all the other display controllers 3, report the state of the display controller 3 with a possible data communication problem to the main controller 1 through the local controller 2 until the next display controller 3 takes over. Through the method, even though several display controllers 3 are out of order, it does not greatly affect to the general quality of the video.

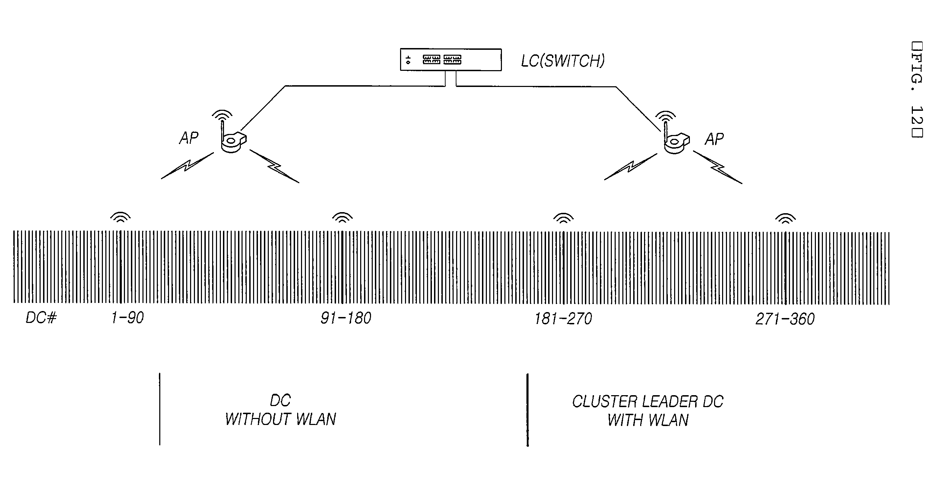

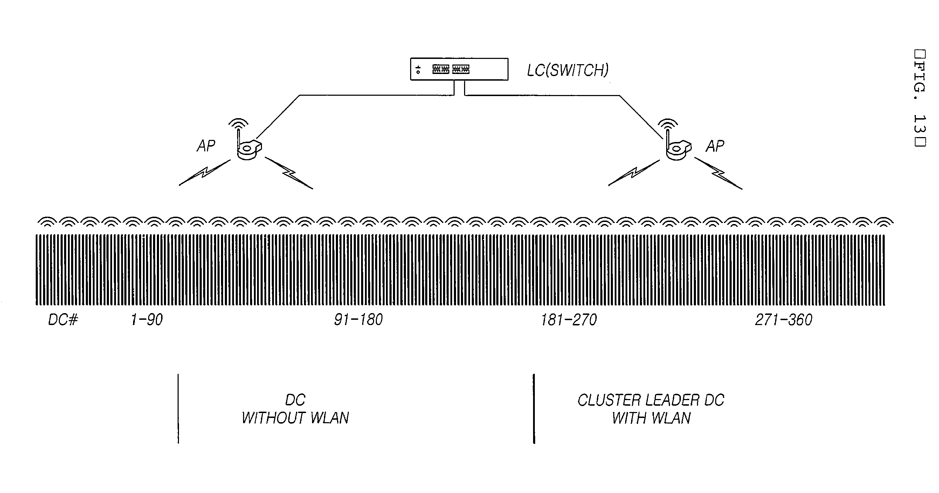

FIG. 12 is a view illustrating a network structure in which cluster leader display controllers are WLAN and RS-485 gateways in a tunnel video system according to an embodiment of the present disclosure, and FIG. 13 is a view illustrating a network structure in which all display controllers are the WLAN client in a tunnel video system according to an embodiment of the present disclosure.

The network shown in FIGs. 12 and 13 employs the WLAN, in which the access point 7 is installed on the local controller 2 and the display controllers 3 become the clients.

The above scheme has an advantage in that the data transmission speed is fast in comparison with the series wired communication and the cable connections are not required, but has a disadvantage in that interference may occur in the train control communication system due to the wireless communications.

However, the downloading is executed mostly during the time when the train is not in service, the bandwidth used in the train control communication and the WLAN bandwidth are separated from each other so that the interference is negligible, the already expensive cable needs extra cost for the cabling work and thus such a wireless scheme has a lot of advantages.

FIG. 12 illustrates the scheme of using only the cluster leaders as the WLAN clients identically to the wired communication scheme and FIG. 13 illustrates the scheme of using every display controller as the WLAN client.

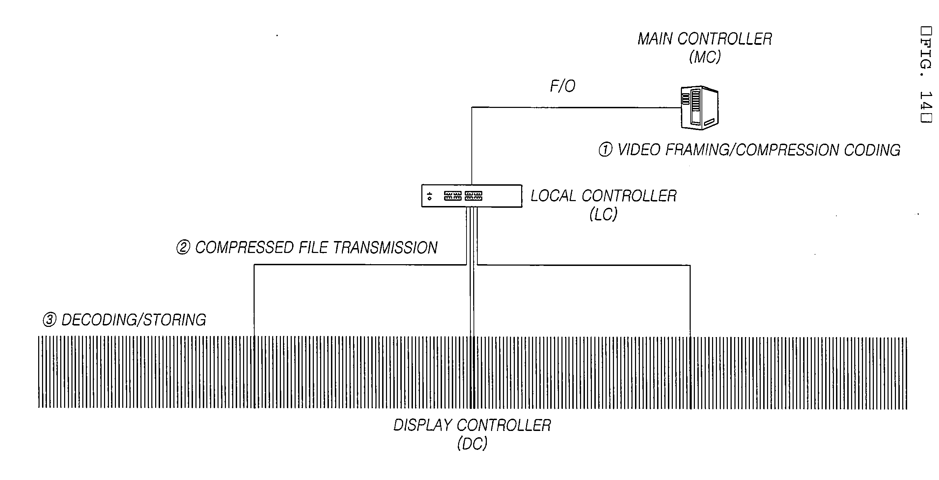

FIG. 14 is a view illustrating a method for downloading by the compression of the video data in the tunnel video system according to an embodiment of the present disclosure.

In the multi-drop series communication scheme, as the number of drops increases or the transmission distance increases, the transmission speed decreases so that if the amount of the downloading data is large, it takes much time for downloading.

In order to overcome such a disadvantage, technology for compressing the contents to be downloaded can be adopted. Specifically, the main controller 1 frames the video file and compresses the contents to be downloaded using the compressor, such as JPEG, and then transmits the compressed contents to the cluster leaders among the display controllers 3 through the local controller 2.

The cluster leader display controllers 3 relay the compressed contents to the display controller 3 in the co-cluster and the receiving display controllers 3 restore the image and then store the same in their image buffers, respectively. By using such a scheme, the downloading time can be shortened approximately as much as the compression rate.

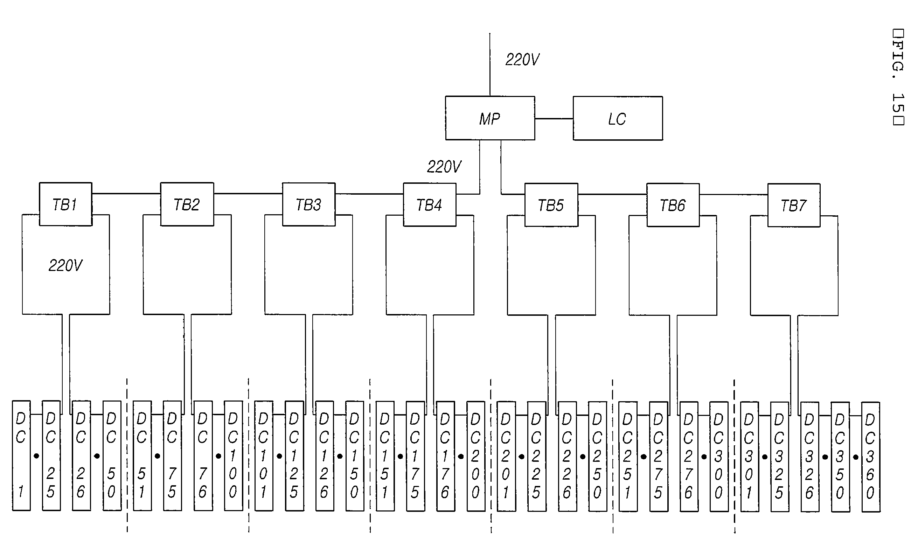

FIG. 15 is a view illustrating a network structure based on a power line communication network in the tunnel video system according to an embodiment of the present disclosure.

An AC power line network supplied from a main power (MP) block to the local controller 2 and display controllers 3 can be used as the data network.

This advantageously obviates the additional installations of the data exclusive cables and connectors. That is, it is possible to construct the power line communication network guaranteeing the QoS of the Ethernet communication using the power line.

**Claims**

1.  A tunnel video system comprising:

    a main controller for operating and managing the system, the main controller being connected with exterior networks;
    a plurality of display controllers connected with the main controller so as to receive data;
    a plurality of LED modules driven by the plurality of display controllers; and
    a plurality of sensors connected at least one of the plurality of display controllers so as to sense the speed of a moving object,
    in which the plurality of display controllers are divided into a plurality of clusters comprising the display controllers connected with the sensors and the display controllers connected with the main controller, respectively,
    one of the display controllers in each of the clusters is a cluster leader display controller which has the data transmitted to the display controllers included in the same cluster by a data network that comprises a first route connected with the main controller and a second route connected with the rest display controllers included in the same cluster, and
    the display controllers connected with the sensors among the display controllers included in each of the clusters have sensor signals transmitted to the display controllers included in the same cluster by a sensor network that comprises a third route connected with the display controllers included in the same cluster.

2.  The tunnel video system as claimed in claim 1, wherein the sensor network further comprises a fourth route for connecting the display controllers connected with the sensors with the display controllers included in other clusters and transmits the sensor signals to the display controllers included in the other clusters.

3. The tunnel video system as claimed in claim 1 or 2, wherein the sensor signals are in the form of square wave pulses to be transmitted to the display controllers.

4. The tunnel video system as claimed in claim 1 or 2, wherein the display controllers connected with the sensors transmit the sensor signals real time through the transmission of the square wave pulses of the signals.

5. The tunnel video system as claimed in claim 1, further comprising a local display controller connecting the main controller with the cluster leader display controllers,
in which the local display controller is connected with the cluster leader display controllers by at least one of a wired connection and a wireless connection, and if wirelessly connected, the data is transmitted through WLAN cards installed on the cluster leader display controllers and an access point connected to the local display controller, and
if connected wired, the data is transmitted through the connections of Ethernet connectors installed on the cluster leader display controllers with the local display controller.

6. The tunnel video system as claimed in claim 1, wherein the main controller frames a video file, compresses the framed video file, and transmits the compressed video file to the display controller, and the display controllers restore the compressed data and store the restored data in image buffers included in the display controllers, respectively.

7. The tunnel video system as claimed in claim 1, wherein the main controller and the display controllers transmit and receive the data through a power line communication network.

8. The tunnel video system as claimed in claim 1, wherein the plurality of sensors comprise sensors attached on walls of a tunnel and reflective plates attached on the moving object through the tunnel.

9. A tunnel video system comprising:

a main controller:
a plurality of display controllers connected with the main controller so as to receive a data;
a plurality of LED modules driven by the plurality of display controllers; and
a plurality of sensors connected to at least one of the plurality of display controllers so as to sense the speed of a moving object,
in which at least one of the plurality of display controllers drives each of the LED modules according to first speed signals sensed by the sensors arranged in a first direction and second speed signals sensed by the sensors arranged in a second direction.

10. The tunnel video system as claimed in claim 9, wherein the plurality of display controllers independently calculate the speed of the moving object according to the sensor signals, respectively.

11. The tunnel video system as claimed in claim 9, wherein the sensor signals are in the form of square waves.

12. The tunnel video system as claimed in claim 1 or 9, wherein the plurality of LED modules comprises a plurality of LEDs that are arranged in one row, respectively, so as to represent one frame of an image.

【FIG. 1】

【FIG. 2】

CONTROL BUS IN ADJACENT-CLUSTER

CONTROL BUS IN CO-CLUSTER

DATA BUS

DISPLAY CONTROLLER (DC)

FIRST PROCESSOR

SECOND PROCESSOR

SDRAM  9

FLASH MEMORY  10

8

HS-UART  11

RS485  12

SPI  13

HPI

RS485  15

RS485  16

SENSOR CONTROL

SENSOR (Opt)  18

LED MODULE  17

LED CONTROL

ETHERNET (Opt)  4

USB  5

IMAGE BUFFER

WLAN (Opt)  6

14

UPT

INTERNET  1

MAIN CONTROLLER (MC)

LOCAL CONTROLLER (LC)  2

AP  7

【FIG. 3】

【FIG. 4】

【FIG. 5】

【FIG. 6】

【FIG. 7】

[FIG. 8]

$D_{HFRAME}$ : HORIZONTAL LENGTH OF FRAME
$D_{VFRAME}$ : VERTICAL LENGTH OF FRAME
$D_{PIXEL}$ : LED PITCH
$D_{BLANK}$ : BLANKING DISTANCE (INTERVAL BETWEEN FRAMES)
$DC_i$ : $i^{th}$ DC LOCATION


$T_{FRAME}$ : TIME TAKEN TO 1 FRAME DISPLAY
$T_{PIXEL}$ : TIME TAKEN TO 1 PIXEL DISPLAY (BLINKING RATE)
$T_{BLANK}$ : TIME INTERVAL BETWEEN FRAME AND FRAME (BLANKING)

【FIG. 9】

【FIG. 10】

| SECOND PROCESSOR | LED DRIVER IC & LEDS |
|---|---|

DISPLAY CONTROL

$T_{SOB-i}$   $T_{HS}$   $T_{F2F-j}$

SYNCHRONIZATION CONTROL

SENSOR

【FIG. 11】

【FIG. 12】

EP 2 278 793 A2

LC(SWITCH)

AP

AP

DC#    1-90              91-180              181-270              271-360

DC
WITHOUT WLAN

CLUSTER LEADER DC
WITH WLAN

FIG. 14

EP 2 278 793 A2

MAIN CONTROLLER
(MC)

F/O

① VIDEO FRAMING/COMPRESSION CODING

LOCAL CONTROLLER
(LC)

② COMPRESSED FILE TRANSMISSION

③ DECODING/STORING

DISPLAY CONTROLLER
(DC)

【FIG. 15】